# EUROPEAN PATENT SPECIFICATION

(11) **EP 1 965 937 B1**
(45) Date of publication and mention of the grant of the patent: **19.05.2010**
(21) Application number: 06716422.8
(22) Date of filing: 16.03.2006
(51) Int. Cl.: B22D 11/051

(54) **CASTING ROLL MOVING APPARATUS OF TWIN ROLL TYPE CONTINUOUS STRIP CASTING PROCESS**
GIESSWALZENBEWEGUNGSVORRICHTUNG FÜR EINEN ZWEIWALZENSTRANGGIESSPROZESS VON BÄNDERN
APPAREIL DE DEPLACEMENT DE CYLINDRE DE LAMINAGE DE PROCEDE DE COULEE EN BANDE CONTINUE ENTRE CYLINDRES

(30) Priority: 27.12.2005 KR 20050130387
(43) Date of publication of application: 10.09.2008
(73) Proprietor: Posco Co., Ltd., Kyungsangbook-do 790-300 (KR)
(72) Inventor: PARK, Cheol-min, Pohang-si, Kyungsangbuk-do 790-300 (KR); YOON, Du-hyong, Pohang-si, Kyungsangbuk-do 790-300 (KR); KANG, Tae-wook, Pohang-si, Kyungsangbuk-do 790-300 (KR); KIM, Sang-hoon, Pohang-si, Kyungsangbuk-do 790-300 (KR)
(74) Representative: Zech, Stefan Markus
(86) International application number: PCT/KR2006/000972
(87) International publication number: WO 2007/074955

(56) References cited:
- JP-A- 05 261 486
- JP-A- 56 113 821
- JP-A- 2002 219 558

## Description

### Technical Field

The present invention relates, in general, to casting roll moving apparatuses for twin roll type continuous strip casting machines which have structures such that casting rolls can smoothly move with reduced friction, and in which, if opposite ends of the casting roll become misaligned, they are automatically realigned and, more particularly, to a casting roll moving apparatus for a twin roll type continuous strip casting process which supports casting rolls using hydraulic pressure and reduces friction through the formation of fluid films during a casting process, so that, if opposite ends of the casting rolls become misaligned by the application of uneven rolling force to the casting rolls, or if the gap between the casting rolls becomes uneven due to longitudinal outside force or due to skull entering between the casting rolls, the casting rolls are automatically realigned, that is, are returned to the original positions thereof.

### Background Art

As well known to those skilled in the art, an S/C (strip casting) process is a process of producing a cast strip 3 by supplying a steel melt 2 between two rolls 1, which are rotating.

In a twin roll type strip casting machine of the S/C process, edge dams are coupled to opposite ends of the casting rolls such that steel melt is prevented from leaking, thus forming a steel melt pool for supplying steel melt between the casting rolls.

The steel melt is solidified while passing through the steel melt pool and is produced into a cast strip after passing through a roll nip.

In the steel melt pool, solidifying shells meet each other and are depressed at high temperature, thus being produced into a cast strip having a plate shape. The point at which the solidifying shells meet each other is called a solidification completion point, and the next section is called a thermal deformation section.

The thermal deformation section has the same role as a hot rolling line. Furthermore, a rolling force is generated by roll separation force when passing the thermal deformation section.

As well, to maintain the thickness of a cast strip constant, the two rolls are continuously moved such that the distance between the two rolls is maintained.

Here, the generated rolling force is divided into pressure due to solidification and rolling force due to friction at a lower position resulting from movement of the rolls.

The rolling force due to friction generates the hunting of the rolling force during a casting process.

This is generated in every casting process and causes uneven rolling force.

Hence, the surface of the cast strip may deteriorate. That is, a defect, in which uneven patterns are formed on the surface, may occur.

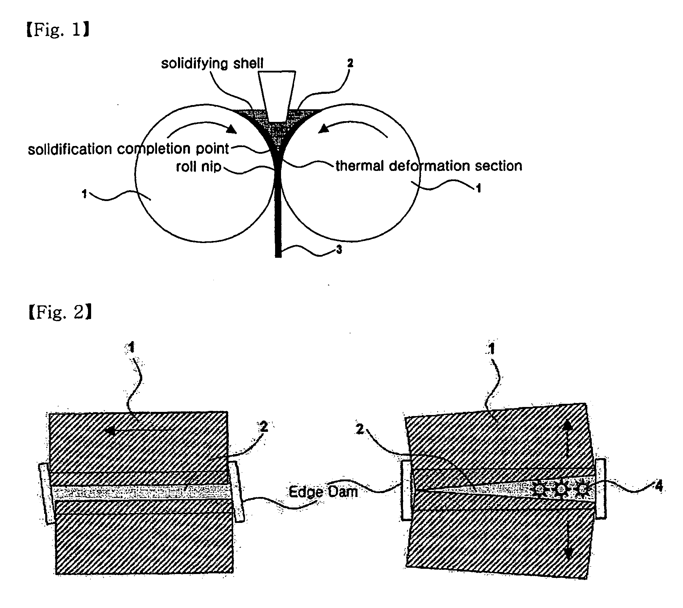

Furthermore, FIG. 2 shows the case in which the opposite ends of the rolls are undesirably misaligned or a gap between the rolls is made uneven by longitudinal outside force or by an uneven increase in the distance between the rolls due to skulls 4 that enter between the rolls.

These directly affect the quality of strip edges, thus the casting process becomes unstable, for example, the recovery rate is reduced or a defective winding phenomenon is caused. In addition, the casting process may be interrupted.

These problems occur because the opposite ends of the rolls, which have been misaligned, cannot be rapidly returned to the original states thereof by the friction of a moving apparatus, which is provided under the rolls, and because the conventional art has no means for rapidly returning the rolls to the original states thereof during the casting process.

Conventional techniques for solving the above problems are classified into two kinds of techniques. The first conventional technique is related to a strip casting (S/C) process, and the second conventional technique is related to a hydrostatic bearing.

A slide guide technique is one strip casting related technique. A slide guide slides on a wear plate using grease applied to the wear plate.

This method has been used in a hot rolling mill and in a medium cast.

In the hot rolling mill, this method is appropriate, because rolls must be moved as required and a slab is in a stationary state.

However, in the S/C process, because steel melt in a liquid phase is treated and roll edges must be reliably sealed, it is inappropriate to use this method.

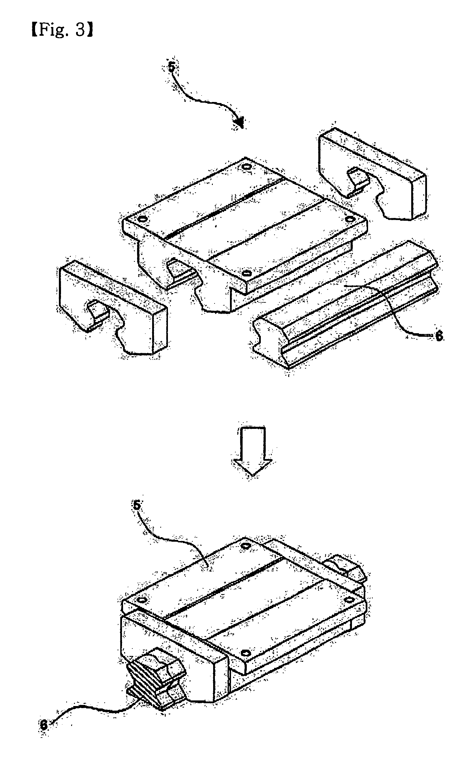

Meanwhile, there is an LM guide (linear motion guide). As shown in FIG. 3, the LM guide includes a rail 6 and a carriage 5. A sliding bearing is installed in the LM guide. The LM guide is widely used in an automation system.

However, in the case that it is used for a long time, durability thereof is reduced by heat generated by friction. Furthermore, there is a problem in that it is difficult to realign the opposite ends of the LM guide when the LM guide is misaligned by outside force.

In the conventional technique related to the hydrostatic bearing, there is the case in which the hydrostatic bearing is used in an LM guide. However, because this incorporates a rail and carriage, a problem in which the LM guide twists cannot be solved.

The document JP2002-A-219558 discloses a twin drum type continuously casting equipment which is provided with a distance detection sensor for measuring the moving amount in the axial direction of a main shaft end face or a drum side face. The equipment of JP2002-A-219558 is provided with a main bearing position moving mechanism for moving the driving side main bearing position in order to correct the moving amount of the main shaft side end face or the drum side face to eliminate the relative displacement of the drums, and a control device for controlling the main shaft bearing position moving mechanism for making a zero-clearance without the penetration nor leakage of the molten metal.

### Disclosure of the Invention

### Technical tasks to be solved by the invention

Accordingly, the present invention has been made keeping in mind the above problems occurring in the prior art, and an object of the present invention is to provide a casting roll moving apparatus of a twin roll type continuous strip casting process which is operated by hydraulic pressure and forms fluid films to reduce friction, and in which, if overload is applied to rolls, the rolls are automatically realigned, thus solving problems of misalignment of the opposite ends of the rolls and of unstable rolling force and unstable roll gap during a casting process.

### Technical Solution

In order to accomplish the above object, the present invention provides a casting roll moving apparatus which can be used with a twin roll type strip casting machine that produces a strip through a method in which, while high-temperature steel melt is supplied between twin rolls which rotate in opposite direction, a large amount of heat is dissipated through the rolls by contact between the steel melt and the rolls, so that the steel melt is rapidly solidified.

The present invention is defined in claim 1 and provides a casting roll moving apparatus of a twin roll type continuous strip casting process, including: a bearing housing supporting a casting roll shaft; a saddle coupled to the lower end of the bearing housing, with a sliding protrusion vertically protruding from a lower surface of the saddle; a mill frame having therein a receiving space so that the sliding protrusion of the saddle is movably inserted in the receiving space, pads provided on respective opposite sidewalls of the receiving space of the mill frame such that the pads are parallel to respective opposite side surfaces of the sliding protrusion of the saddle, and a shoe provided on the bottom of the receiving space such that the shoe is parallel to the lower surface of the sliding protrusion; and a hydraulic pressure supplying means for supplying fluid to opposite sidewalls and the bottom of the receiving space of the mill frame. The fluid supplying means includes a fluid storage tank storing the fluid, and a fluid distribution pipe line distributing the fluid from the fluid storage tank to the receiving space.

Furthermore, in the present invention, each of the shoe and the pads has a nozzle to discharge the fluid to the sliding protrusion. The shoe and the pads comprise two or more shoes and pads such that hydraulic pressure is evenly applied to the overall opposite side surfaces and the overall lower surface of the sliding protrusion. Hydraulic pressures, which are substantially equal to each other, are applied between the pads and the sliding protrusion of the saddle. The casting roll moving apparatus further includes a fluid discharge pipe provided in the bottom of the receiving space of the mill frame to discharge the fluid, supplied from the hydraulic pressure supplying means, outside the receiving space. The fluid discharge pipe is connected to a circulation pipe so that the fluid is returned to the fluid storage tank. The fluid distribution pipe line includes a shock absorber 22 and a fluid distributor 23.

### Advantageous Effects

As described above, in the casting roll moving apparatus of the present invention, opposite ends of the casting rolls are automatically aligned, so that the recovery rate of the apparatus is increased, and a stable casting process is ensured. Furthermore, because friction of the apparatus is markedly reduced, by which even rolling force is ensured, the gap between the rolls is maintained constant. Thus, the thickness of a cast strip becomes even, and a problem of an uneven surface pattern is solved.

### Brief Description of Drawings

FIG. 1 is a schematic view showing a conventional twin roll type continuous strip casting process;
FIG. 2 is views showing examples of defective arrangement of rolls in the conventional art;
FIG. 3 is a view showing an example of a typical LM (linear motion guide);
FIG. 4 is a schematic view of a casting roll moving apparatus according to an embodiment of the present invention;
FIG. 5 is an illustrative view showing the operation of the casting roll moving apparatus according to the present invention;

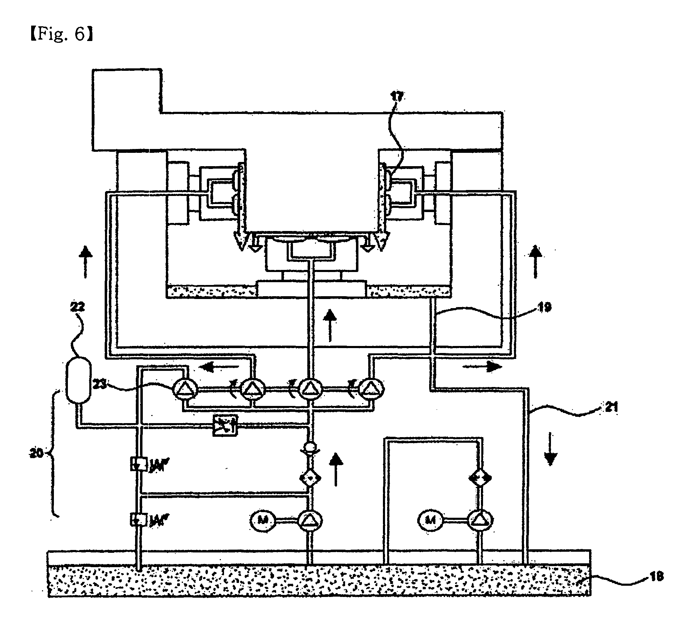

FIG. 6 is a view showing an operating structure of the casting roll moving apparatus according to the present invention;
FIG. 7 is graphs comparing the results of rolling force tests between the moving apparatus of the present invention and the conventional moving apparatus; and
FIG. 8 is pictures comparing the edges of cast strips using the moving apparatus of the present invention and using the conventional moving apparatus.

### Best Mode for Carrying Out the Invention

Hereinafter, the present invention will be described in detail with reference to the attached drawings.

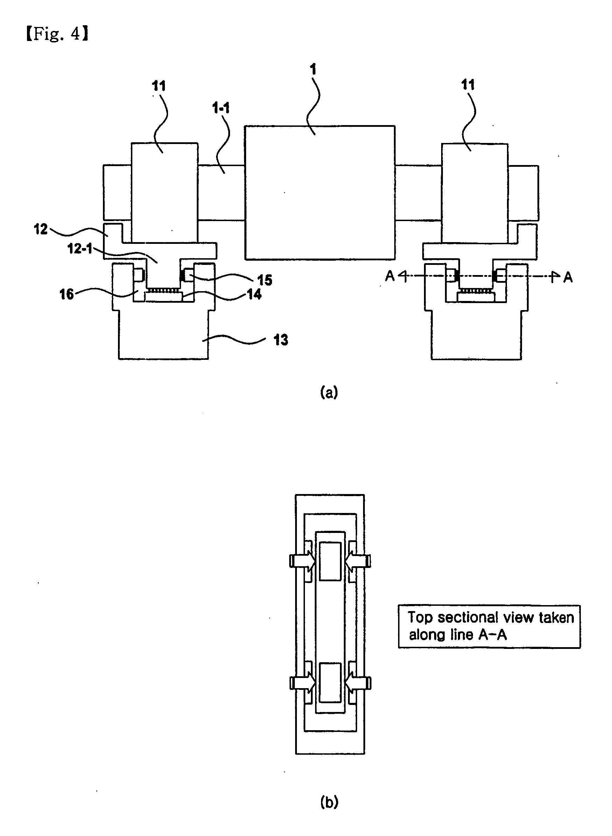

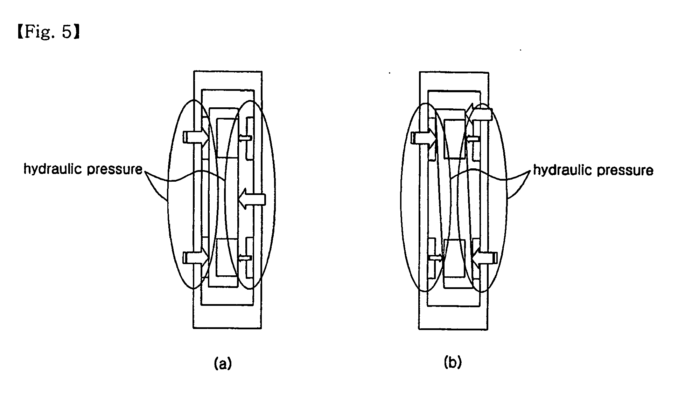

FIG. 4 is a schematic view of a casting roll moving apparatus according to an embodiment of the present invention. FIG. 5 is an illustrative view showing the operation of the casting roll moving apparatus of the present invention.

Referring to the drawings, in the casting roll moving apparatus of the present invention, bearing housings 11 surround and support a roll shaft 1-1, which is integrated with a casting roll 1. Furthermore, each bearing housing 11 is coupled to each mill frame 13 through a saddle 12. A sliding protrusion 12-1 protrudes downwards from a central portion of the lower surface of each saddle 12. Furthermore, the saddle 12 is coupled to the lower surface of the bearing housing 11 using bolts or the like.

Each mill frame 13 has in an upper surface thereof a receiving space 16, in which the sliding protrusion 12-1 is movably inserted. Pads 15 are attached to the opposite sidewalls of the receiving space 16 such that the sliding protrusion 12-1 and the pads 15 maintain constant distance therebetween and are parallel to each other. A shoe 14 is provided on the bottom of the receiving space 16 such that it is parallel to and maintains a constant distance from the lower surface of the sliding protrusion 12-1. A nozzle 17 for discharging fluid to the sliding protrusion 12-1 is installed in each of the shoes 14 and the pads 15. It is preferable that two or more nozzles 17 be provided at positions corresponding to the sliding protrusion 12-1 to evenly apply pressure to the sidewalls and the lower surface of the sliding protrusion 12-1.

A fluid storage tank 18 and a fluid distribution pipe line 20 for supplying fluid into the receiving space 16 of the mill frame 13 and a circulation pipe 21 for returning used fluid from the receiving space 16 to the fluid storage tank 18 are provided outside the mill frame 13.

The fluid distribution pipe line 20 is coupled to the shoe 14 and the pads 15 of the receiving space 16, and the fluid circulation pipe 21 is connected to a fluid discharge pipe 19, which is provided in the bottom of the receiving space 16.

In the present invention, having the above-mentioned construction, during a casting process, fluid is continuously supplied at a constant pressure to the shoe 14 and the pads 15 of the receiving space 16 through the fluid distribution 20. The supplied fluid is discharged to the opposite sidewalls and the lower surface of the sliding protrusion 12-1 of the saddle at the same pressure through the nozzles 17, thus forming fluid films thereon.

Therefore, the sliding protrusion 12-1 maintains the initial position thereof because fluid is discharged to the opposite sidewalls of the sliding protrusion 12-1 at even pressure. Thereby, the casting roll 1 can also maintain the original position thereof, thus making a normal casting operation possible.

As shown in FIGS. 5(a), during the casting process, when the roll is moved in one direction by outside force applied to the roll, a difference in hydraulic pressure occurs between the opposite sidewalls of the sliding protrusion. That is, hydraulic pressure is increased at the side at which the gap is reduced, so that the roll is automatically returned to the original position thereof while the uneven hydraulic pressure state is changed to an even hydraulic pressure state.

As shown in FIGS. 5(b), even when the opposite ends of the roll are moved in different directions because uneven outside force is applied to the roll, hydraulic pressure is increased at the side at which the gap is reduced, thus the roll is automatically returned to the original position thereof.

As such, in the present invention, fluid films are formed both between the sliding protrusion and the pads and between the sliding protrusion and the shoe by hydraulic pressure discharged from the shoe and the pads, thus the saddle can smoothly move with reduced friction. Furthermore, the saddle can be automatically returned to the original position thereof by hydraulic pressure, which is evenly discharged.

### (Example)

The hunting values of rolling forces, cast strip edges and wound conditions between a coil manufactured using the apparatus of the present invention and a coil manufactured using the conventional apparatus were compared.

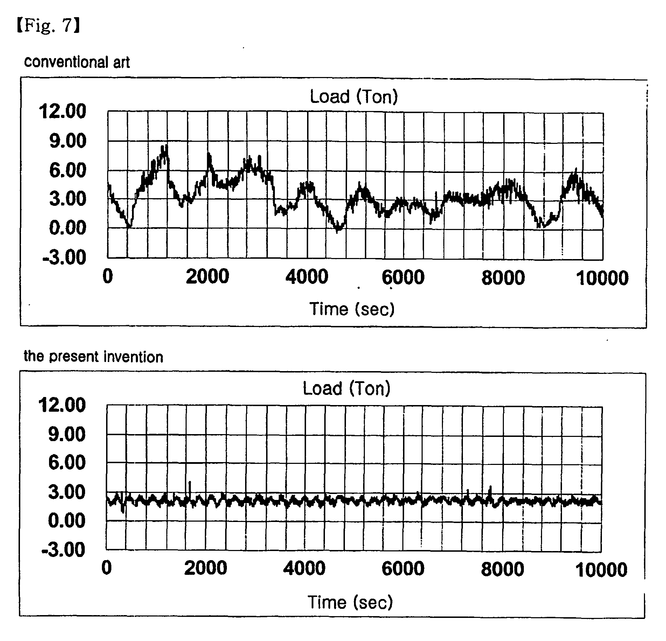

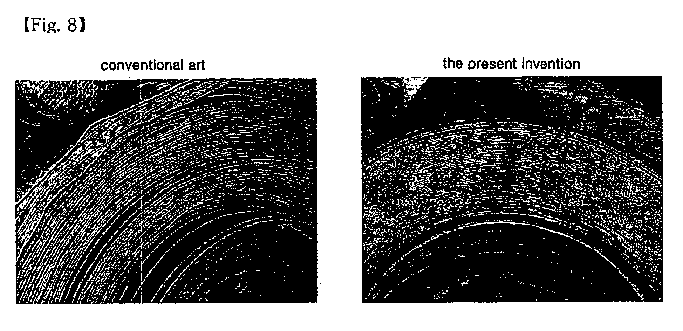

The results were shown in FIGS. 7 and 8.

As shown in FIG. 7, it is appreciated that the data loading value of the rolling force of the apparatus of the present invention is markedly improved compared to that of the conventional apparatus.

In detail, the hunting value of the rolling force, which was +-3 ton, is reduced to +-0.5 ton. Thereby, stability of the roll gap is realized, so that variation in the thickness of the cast strip is reduced.

That is, in the conventional art, variation in the thickness of the cast strip in the longitudinal direction ranges from 70 to 100 microns, but, in the present invention; it is reduced to 20 to 30 microns. This is very important in the art, because the variation in thickness of the cast strip affects a subsequent rolling process.

Furthermore, as shown in FIG. 8, the cast strip edge and the winding condition of the present invention were also found to be superior to those of the conventional art. It is assumed that this was achieved because the arrangement of opposite ends of the casting rolls was satisfactory thanks to the maintenance of stiffness by preloading. As a result, the recovery rate of the cast strip edge is markedly enhanced.

## Claims

1. A casting roll moving apparatus for a twin roll type continuous strip casting process, comprising:
a bearing housing (11) supporting a casting roll shaft (1-1);
a saddle (12) coupled to a lower end of the bearing housing (11), with a sliding protrusion (12-1) vertically protruding from a lower surface of the saddle (12);
a mill frame (13) having therein a receiving space (16), so that the sliding protrusion (12-1) of the saddle (12) is movably inserted in the receiving space (16); and
hydraulic pressure supplying means for supplying fluid to opposite sidewalls and a bottom of the receiving space (16) of the mill frame (13).

2. The casting roll moving apparatus for the twin roll type continuous strip casting process according to claim 1, wherein the saddle (12) is coupled to the bearing housing (11) using a bolt.

3. The casting roll moving apparatus for the twin roll type continuous strip casting process according to claim 1, further comprising:
pads (15) provided on respective opposite sidewalls of the receiving space (16) of the mill frame such that the pads (15) are parallel to respective opposite side surfaces of the sliding protrusion (12-1) of the saddle; and
a shoe (14) provided on the bottom of the receiving space (16) such that the shoe (14) is parallel to a lower surface of the sliding protrusion (12-1).

4. The casting roll moving apparatus for the twin roll type continuous strip casting process according to claim 3, wherein each of the shoe (14) and the pads (15) has a nozzle (17) to discharge the fluid to the sliding protrusion (12-1).

5. The casting roll moving apparatus for the twin roll type continuous strip casting process according to claim 3, wherein the shoe (14) and the pads (15) comprise two or more shoes (14) and pads (15) such that hydraulic pressure is evenly applied to all of both of the opposite side surfaces and the entire lower surface of the sliding protrusion (12-1).

6. The casting roll moving apparatus for the twin roll type continuous strip casting process according to claim 3, wherein hydraulic pressures, which are substantially equal to each other, are applied between the pads (15) and the sliding protrusion (12-1) of the saddle.

7. The casting roll moving apparatus for the twin roll type continuous strip casting process according to claim 1, wherein the fluid supplying means comprises a fluid storage tank (18) storing the fluid, and a fluid distribution pipe line (20) distributing the fluid from the fluid storage tank (18) to the receiving space (16).

8. The casting roll moving apparatus for the twin roll type continuous strip casting process according to claim 1, further comprising:
a fluid discharge pipe (19) provided in the bottom of the receiving space (16) of the mill frame to discharge the fluid, supplied from the hydraulic pressure supplying means, outside the receiving space (16).

9. The casting roll moving apparatus for the twin roll type continuous strip casting process according to claim 8, wherein the fluid discharge pipe (19) is connected to a circulation pipe (21) so that the fluid is restored into the fluid storage tank (18).

10. The casting roll moving apparatus for the twin roll type continuous strip casting process according to claim 7, wherein the fluid distribution pipe line (20) comprises a shock absorber (22) and a fluid distributor (23).

## Patentansprüche

1. Gusswalzenbewegungsvorrichtung für ein kontinuierliches Doppelwalzen-Bandstranggussverfahren, Folgendes aufweisend:
ein Lagergehäuse (11), das eine Gusswalzenwelle (1-1) lagert;
einen mit einem unteren Ende des Lagergehäuses (11) verbundenen Sattel (12) mit einem Gleitvorsprung (12-1), der vertikal von einer Unterseite des Sattels (12) vorsteht;
ein Walzengestell (13), das einen Aufnahmeraum (16) in sich aufweist, so dass der Gleitvorsprung (12-1) des Sattels (12) beweglich in den Aufnahmeraum (16) eingesetzt ist; und
Hydraulikdruckversorgungseinrichtungen, um gegenüberliegende Seitenwände und einen Boden des Aufnahmeraums (16) des Walzengestells (13) mit Fluid zu versorgen.

2. Gusswalzenbewegungsvorrichtung für ein Doppelwalzen-Bandstranggussverfahren nach Anspruch 1, wobei der Sattel (12) unter Verwendung eines Schraubenbolzens mit dem Lagergehäuse (11) verbunden ist.

3. Gusswalzenbewegungsvorrichtung für ein Doppelwalzen-Bandstranggussverfahren nach Anspruch 1, darüber hinaus aufweisend:
Stützstücke (15), die an jeweiligen gegenüberliegenden Seitenwänden des Aufnahmeraums (16) des Walzengestells so vorgesehen sind, dass die Stützstücke (15) zu den jeweiligen gegenüberliegenden Seitenflächen des Gleitvorsprungs (12-1) des Sattels parallel sind; und
einen Schuh (14), der auf dem Boden des Aufnahmeraums (16) so vorgesehen ist, dass der Schuh (14) parallel zu einer Unterseite des Gleitvorsprungs (12-1) ist.

4. Gusswalzenbewegungsvorrichtung für ein Doppelwalzen-Bandstranggussverfahren nach Anspruch 3, wobei sowohl der Schuh (14) als auch die Stützstücke (15) eine Düse (17) hat bzw. haben, um den Gleitvorsprung (12-1) mit dem Fluid zu versorgen.

5. Gusswalzenbewegungsvorrichtung für ein Doppelwalzen-Bandstranggussverfahren nach Anspruch 3, wobei der Schuh (14) und die Stützstücke (15) zwei oder mehr Schuhe (14) und Stützstücke (15) umfassen, so dass sowohl die beiden gegenüberliegenden Seitenflächen als auch die gesamte Unterseite des Gleitvorsprungs (12-1) gleichmäßig mit Hydraulikdruck beaufschlagt werden.

6. Gusswalzenbewegungsvorrichtung für ein Doppelwalzen-Bandstranggussverfahren nach Anspruch 3, wobei zwischen den Stützstücken (15) und dem Gleitvorsprung (12-1) des Sattels Hydraulikdrücke herrschen, die einander im Wesentlichen gleich sind.

7. Gusswalzenbewegungsvorrichtung für ein Doppelwalzen-Bandstranggussverfahren nach Anspruch 1, wobei die Fluidversorgungseinrichtung einen das Fluid vorhaltenden Fluidvorhaltetank (18) und eine Fluidverteilungsrohrleitung (20) umfasst, die das Fluid aus dem Fluidvorhaltetank (18) an den Aufnahmeraum (16) verteilt.

8. Gusswalzenbewegungsvorrichtung für ein Doppelwalzen-Bandstranggussverfahren nach Anspruch 1, darüber hinaus aufweisend:
ein Fluidablaufrohr (19), das im Boden des Aufnahmeraums (16) des Walzengestells vorgesehen ist, um das von der Hydraulikdruckversorgungseinrichtung zugeführte Fluid aus dem Aufnahmeraum (16) auszuleiten.

9. Gusswalzenbewegungsvorrichtung für ein Doppelwalzen-Bandstranggussverfahren nach Anspruch 8, wobei das Fluidablaufrohr (19) so an ein Umlaufrohr (21) angeschlossen ist, dass das Fluid in den Fluidvorhaltetank (18) zurückgeleitet wird.

10. Gusswalzenbewegungsvorrichtung für ein Doppelwalzen-Bandstranggussverfahren nach Anspruch 7, wobei die Fluidverteilungsrohrleitung (20) einen Stoßdämpfer (22) und einen Fluidverteiler (23) umfasst.

## Revendications

1. Appareil de déplacement de cylindre de coulée pour un procédé de coulée continue de bandes entre deux cylindres, comportant :
boîte de palier (11) supportant un arbre de cylindre de coulée (1-1) ;
un socle (12) relié à une extrémité inférieure de la boîte de palier (11), présentant une saillie coulissante (12-1) saillant verticalement d'une surface inférieure du socle (12) ;
un châssis de cylindre (13) présentant à l'intérieur une cavité de réception (16) de telle sorte que la saillie coulissante (12-1) du socle (12) soit logée de manière mobile dans la cavité de réception (16) ; et
des moyens d'alimentation en pression hydraulique destinés à amener du fluide à des parois latérales opposées et à un fond de la cavité de réception (16) du châssis de cylindre (13).

2. L'appareil de déplacement de cylindre de coulée pour un procédé de coulée continue de bandes entre deux cylindres selon la revendication 1, où le socle (12) est relié à la boîte de palier (11) moyennant un boulon.

3. L'appareil de déplacement de cylindre de coulée pour un procédé de coulée continue de bandes entre deux cylindres selon la revendication 1, comportant en outre :
des patins (15) disposés sur les parois latérales opposées respectives de la cavité de réception (16) du châssis de cylindre de telle sorte que les patins (15) soient parallèles aux parois latérales opposées respectives de la saillie coulissante (12-1) du socle ; et
un sabot (14) disposé sur le fond de la cavité de réception (16) de telle sorte que le sabot (14) soit parallèle à une surface inférieure de la saillie coulissante (12-1).

4. L'appareil de déplacement de cylindre de coulée pour un procédé de coulée continue de bandes entre deux cylindres selon la revendication 3, où le sabot (14) et les patins (15) ont chacun une tuyère (17) destinée à alimenter la saillie coulissante (12-1) en fluide.

5. L'appareil de déplacement de cylindre de coulée pour un procédé de coulée continue de bandes entre deux cylindres selon la revendication 3, où le sabot (14) et les patins (15) comprennent deux sabots (14) et patins (15) ou plus, de telle sorte qu'une pression hydraulique soit appliquée de manière égale à la fois sur les surfaces latérales opposées et sur toute la surface inférieure de la saillie coulissante (12-1).

6. L'appareil de déplacement de cylindre de coulée pour un procédé de coulée continue de bandes entre deux cylindres selon la revendication 3, où des pressions hydrauliques, qui sont sensiblement égales les unes aux autres, sont appliquées entre les patins (15) et la saillie coulissante (12-1) du socle.

7. L'appareil de déplacement de cylindre de coulée pour un procédé de coulée continue de bandes entre deux cylindres selon la revendication 1, où les moyens d'amenée de fluide comprennent un réservoir de stockage de fluide (18) stockant le fluide, et une conduite de distribution de fluide (20) distribuant le fluide du réservoir de stockage de fluide (18) à la cavité de réception (16).

8. L'appareil de déplacement de cylindre de coulée pour un procédé de coulée continue de bandes entre deux cylindres selon la revendication 1, comportant en outre :
une conduite de refoulement de fluide (19) disposée dans le fond de la cavité de réception (16) du châssis pour refouler le fluide, amené par les moyens d'alimentation en pression hydraulique, à l'extérieur de la cavité de réception (16).

9. L'appareil de déplacement de cylindre de coulée pour un procédé de coulée continue de bandes entre deux cylindres selon la revendication 8, où la conduite de refoulement de fluide (19) est connectée à une conduite de circulation (21) de telle sorte que le fluide soit récupéré dans le réservoir de stockage de fluide (18).

10. L'appareil de déplacement de cylindre de coulée pour un procédé de coulée continue de bandes entre deux cylindres selon la revendication 7, où la conduite de distribution de fluide (20) comprend un amortisseur de chocs (22) et un distributeur de fluide (23).
